# EUROPEAN PATENT SPECIFICATION

(11) **EP 1 535 802 B1**
(45) Date of publication and mention of the grant of the patent: **29.08.2007**
(21) Application number: 04445122.7
(22) Date of filing: 26.11.2004
(51) Int. Cl.: B60R 9/055

(54) **Clamping system**
Spannvorrichtung
System de serrage

(30) Priority: 28.11.2003 SE 0303211
(43) Date of publication of application: 01.06.2005
(73) Proprietor: Autoform i Malung AB, 782 24 Malung (SE)
(72) Inventor: Isaksson, Sven, 782 30 Malung (SE); Pettersson, Rolf, 782 35 Malung (SE)
(74) Representative: Strandin, Heléne

(56) References cited:
- EP-A1- 1 338 474
- DE-U1- 29 703 018

## Description

The present invention concerns a clamping system for clamping of a load container, for example a roof box or the like, at a load suspension device, for example a roof rack of a vehicle.

### Known prior art

Known clamping systems for load containers, such as roof boxes or similar freight and storage devices, comprises screw means for screwing to a roof rack. The screw means are lead from underneath the roof box through an opening into the roof box so that a roof rack is fixedly gripped underneath the roof box. From the inside of the roof box the screw means then is tightened so that the roof box is fixed at the roof rack by means of the screw means. Commonly, four screw means are used. The reason for screwing them on the inside of the roof box is that the roof box will be more difficult to steal when the lid of the roof box is closed and locked.

DE 297 03 018 U1 comprises the features mentioned in the preamble of claim 1.

Load containers, such as roof boxes, is generally designed so that they open up along one of the long sides whereupon the opposite long side is provided with hinges and is closed for access into the inner space of the roof box. This leads to the fact that the screw means shall be attached and tightened from the open long side. The two screw means arranged closest to the open long side are fairly easy to reach but those arranged on the closed side are difficult to reach since one must stretch out into the box to its opposite side and this when the roof box is placed on a roof rack of a car.

An attempt to improve the clamping of a roof box to a roof rack is shown in SE 504 607. There, a hook with a tightening handle is show, which is intended to be mounted from the inside of the roof box. The hook is passed through an opening in the bottom of the roof box and hooks around a roof rack underneath the roof box whereafter the whole clamping device must be displaced along the bottom of the roof box so that an end of the hook will be placed on top of the bottom of the roof box ion its inside. The tightening handle, in vertical position, will then be screwed down so that the hook is biased against the roof rack whereupon the tightening handle is lowered and pushed down against the inside of the bottom so that the top of an excenter portion on the tightening handle will be passed and the tightening handle will be in a horizontal position.

One problem with this solution is that it still is rather bothersome in that the hook first must be lead around the roof rack and then in again into the roof box and be biased with the tightening handle before it at last will be pushed down to the clamped position.

A more serious problem is that it still is just as difficult to reach the two inner clamping devices and that the force required to be applied to the tightening handle is considerable in order to achieve good clamping. When it comes to the two outer clamping devices it is for most people possible to gain help from gravity force in a certain extent at lowering and downpushing of the tightening handle but at the inner clamping devices may only, or for certain tall people mostly, muscle force be used.

### Summery of the invention

The object of the present invention is to provide a clamping system, which is easy to attach and do not require large forces for clamping.

This object is met by a clamping system according to claim 1. Preferred embodiments are described in the depending claims.

The advantages of the clamping system according to the present invention are for example with one handgrip two clamps are tightened at the same time. Additionally considerably less forces are required in order to achieve the clamping than in previously known art.

### Short description of the drawings

The invention will now be described in more detail under reference to the enclosed drawings, in which:
- Fig. 1: illustrates an attachment hook, comprised in the clamping system according to the present invention, attached to a roof rack.
- Fig. 2: illustrates the clamping system according to the present invention in a mounted but not tightened position.
- Fig. 3: illustrates the inside of a roof box clamped with the clamping system according to the present invention.

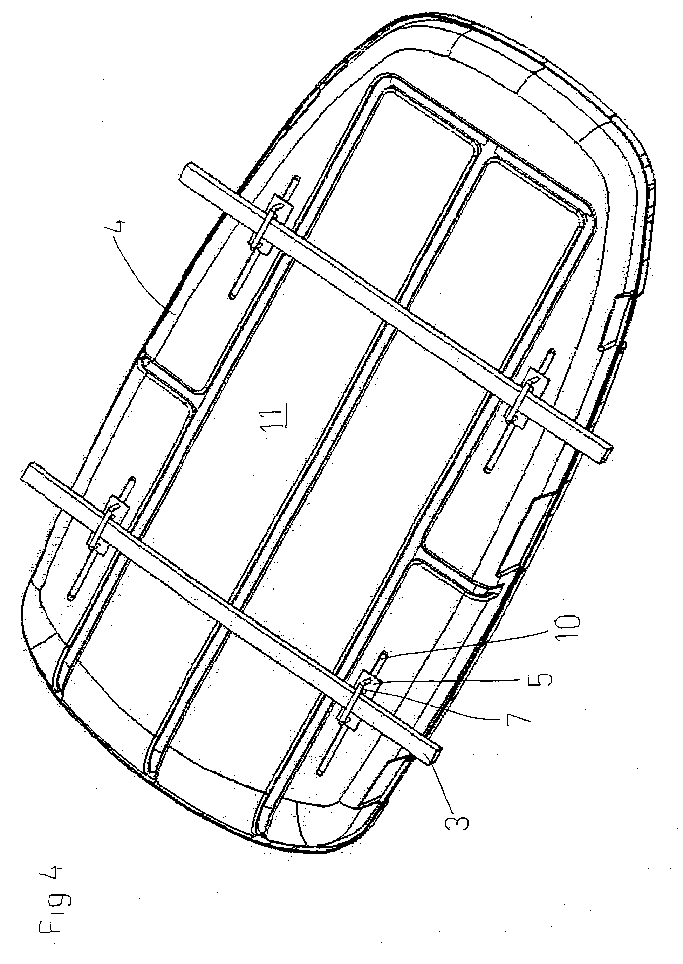

- Fig. 4: illustrates a roof box from underneath clamped by means of the clamping system according to the present invention.

### Detailed description of preferred embodiment

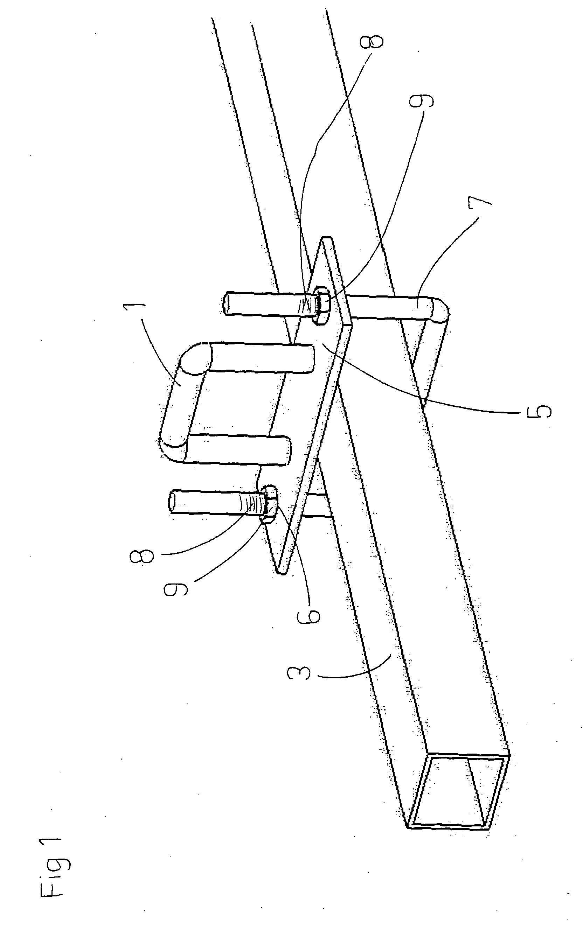

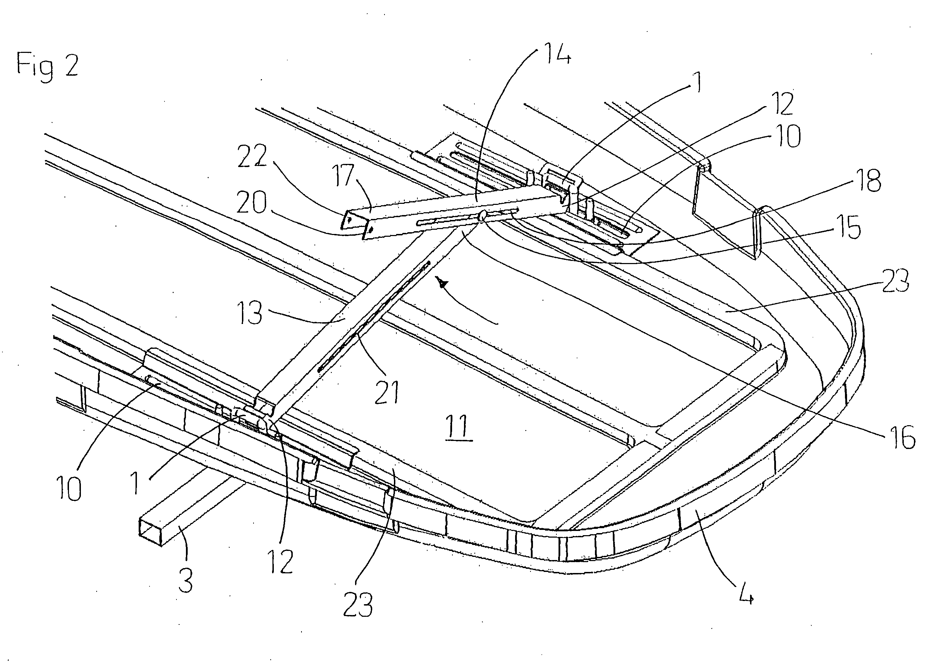

The clamping system according to the present invention comprises at least a couple of attachment hooks 1 and at least one tightening arm 2, see Fig. 1 and 2. The attachment hooks 1 are provided to be attached at a load suspension device 3, such as a roof rack provided on a vehicle. The tightening arm 2 is provided between the pair of attachment hooks 1 when a load container 4, such as a roof box or the like, is to be clamped. Generally, two roof racks 3 are provided on the vehicle (not shown) whereupon each has a pair of attachment hooks 1 attached. For each pair of attachment hooks 1 a tightening arm 2 is belonging, i.e. in the normal case two tightening arms 2 are required.

In Fig. 1 a preferred embodiment of an attachment hook 1 is shown. The attachment hook 1 may be attached in a desired way at the load suspension device 3. In the shown case the attachment hook 1 comprises a hook welded to a plate 5. The plate 5 is provided with two through going holes 6 for receiving a loop 7, which at least along a portion of its loop legs are provided with threads 8 so that the roof rack 3 may be clamped between the loop 7 and the plate 5 by means of nuts 9. In this way the attachment hook 1 may be attached in desired position at the load suspension device 3.

The attachment hooks 1 are adapted to pass through opening or slits 10 in the bottom 11 of the roof box 4, see Fig. 2. The pair of attachment hooks 1 are thus positioned so that they fit in with the slits of the roof box 4. These attachment hooks 1 may be left on the load suspension device 3 also when the roof box 4 is taken off. A great advantage with this design of the attachment at the load suspension device of the attachment hooks is that once the roof box 4 is mounted, the nuts 9 become unaccessible to unauthorized people in their squeezed in position between the plate 5 and the bottom 11 of the roof box.

In Fig. 2 a first embodiment of a tightening arm 2 according to the present invention is shown. The tightening arm 2 is provided substantially parallel with the load suspension device 3 on which a pair of attachment hooks 1 are provided. The outer ends 12 of the tightening arm 2 are adapted to be run into the attachment hooks 1 in the portion of the hooks which protrudes into the roof box 4 from the under side of the bottom 11 through the slits 10. In other words the tightening arm 2 is mounted within the roof box 4 in the vicinity of the inside of its bottom 11.

The tightening arm 2 is preferably divided in two parts having a first part 13 and a second part 14 linked together by means of a hinge pin 15 arranged orthogonally to the length direction of the tightening arm 2. As is shown in Fig. 2, the end 16 of the first part 13, which is opposite the outer end 12 of the tightening arm 2, is pivotably attached at the second part somewhere between the free end 17 of the second part, which is opposite the outer end 12 of the tightening arm 2.

In the shown embodiment in Fig. 2 a lengthwise slit 18 is present in the second part 14 so that an adjustment of the attachment point of the hinge pin 15 in the second part 14 may be performed. In such a way may the one and same tightening arm 2 be used for clamping of different roof boxes 4 having different width between the attachment slits 10. The tightening arm 2 may also have a fixed length, i.e. lack the slit 18 and the adjustment possibility which arise due to that.

In the shown embodiment of Fig. 2, the second part 14 is shaped as a U-beam so that it may be brought down over the first part 13, which in the shown case is positioned underneath the second part 14. In another variant of the tightening arm 2 the first 13 and the second 14 part could be provided side by side and pivotably connected for example by means of a common axle, which at least partially extends into the two parts 13, 14 but may fully pass through both the parts 13, 14. According to a further embodiment of the tightening arm 2 none of the two parts need to overlap each other or be longer than that their added length substantially corresponds to the total length of the tightening arm 2 but their ends 16, 17 are adjacent and hinged to each other.

When the roof box 4 finally shall be clamped the second part 14 of the tightening arm 2 is pressed down as a lever whereby the ends 12 of the tightening arm 2 are pushed up against the inside of the top portion of each attachment hook 1 and the bottom 11 of the roof box 4, for example via lengthwise protrusions 23, is clamped between the tightening arm 2 and the plate 5 in the attachment hook 1, i.e. indirectly against the load suspension device 3, via the plate 5. Or in the case the attachment hook 1 is designed without a plate 55, the bottom 11 of the roof box 4 is directly clamped between the ends 12 of the tightening arm 2 and the load suspension device 3. In the embodiment where the added length of the parts 13, 14 substantially corresponds to the total length of the tightening arm 2 the inner ends 16, 17 are pressed together down towards the bottom 11.

In order to achieve the best clamping function the inner measurement of the hook and the thickness of the end 12 of the tightening arm 2 ought to be adapted to each other and preferably also the height of the protrusion 23 and/or the thickness of the bottom 11 of the roof box 4 be taken into consideration, if possible. If desired, a dent (not shown) for the tightening arm 2 may also be provided in the bottom 11 of the roof box 4, or grooves or somethingelse friction enhancing means or device provided to further prevent that the roof box 4 slides in relation to the load suspension device 3. Anyway, the roof box can never slide longer than the length of the slit 10.

When the second part 14 of the tightening arm 2 is pushed down it is desirable to be abele to lock the two parts 13, 14 of the tightening arm 2 relative each other in this position, independent if the two parts 13, 14 are place on top of each other or beside each other. This can be done in many different ways, as the person skilled in the art understands.

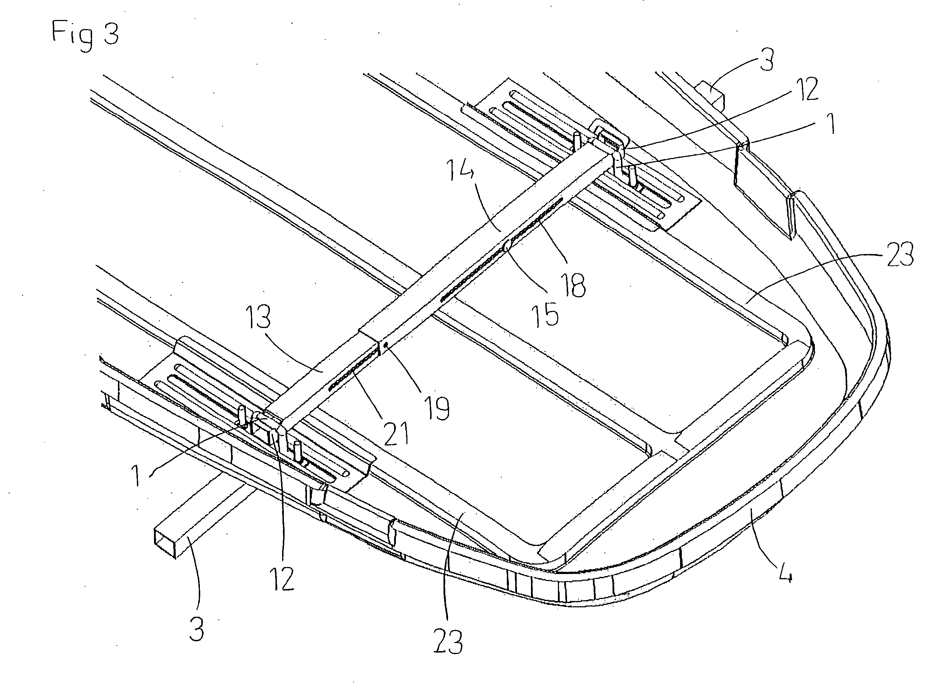

A preferred way is that a pin 19, see Fig. 3, is lead into at least a first recess 20 in the free end 17 of the second part 14 of the tightening arm 2 and at least into a first recess 21 in the first part 13 of the tightening arm 2, whereby the two parts 13, 14 are locked to each other. The first recess 21 in the first part 13 may be a through going hole in the case the length of the tightening arm 2 is not adjustable or a slit, as is shown in the embodiment in Fig. 2 and 3, when the length of the tightening arm 2 is adjustable. In the shown embodiment the pin 19 also goes into a second recess 22 in the free end 17 of the second part 14 end through a second recess (not shown) in the first part 13

Other ways may for example be to tighten a strap around the two parts 13, 14, provide a hook at the second part that can be swung around the first part 13, or provide snap means in the one part which springing cooperates with a recess in the other part. In the embodiment where the added length of the parts 13, 14 substantially corresponds to the total length of the tightening arm 2 a lengthwise pin may also be used.

The most appearent advantages of the present invention are that two attachments may be done by means of one single clamping, which means that in the ordinary case with four attachments, only two clampings need to be done by means of the two tightening arms. Additionally one is not required to stretch all the way into the inner attachments but the tightening arms may be easily maneuvered preferably closer to the open side of the roof box than the middle. Due to the lever function the required force to clamp the tightening arm 2 neither be large, especially if the free end 17 of the second part 14 is at a great distance from the hinge pin 15 between the two parts 13, 14.

## Claims

1. A clamping system for clamping a load container (4), for example a roof box, to a load suspension device (3), comprising at least one pair of attachment hooks (1) for attachment to the load suspension device (3) and at least one tightening arm (2) provided for clamping of the load container (4) to the load suspension device (3), whereby the attachment hooks (1) are insertable into the load container (4) and the tightening arm (2) is provided between the pair of attachment hooks (1) on the inside of the load container (4), **characterized in that** the opposite ends (12) of the tightening arm (2) are insertable into the portion of the attachment hooks that protrudes into the load container (4), the tightening arm (2) comprises a first part (13) and a second part (14) which are hingably connected to each other and that the tightening arm (2) when it is pushed down against or adjacent to the inner bottom (11) of the load container (4), so that the load container (4) is clamped to the load suspension device (3), is lockable in this position.

2. A clamping system according to claim 1, wherein a pin (19) cooperates with at least a first recess (20) in the second part (14) of the tightening arm (2) and at least a recess (21) in the first part (13) of the tightening arm (2) in a locked position when the load container (4) is clamped to the load suspension device (3).

3. A clamping system according to claim 1 or 2, wherein the tightening arm (2) by means of lever force clamps the load container (4) directly or indirectly against the load suspension device (3).

4. A clamping system according to claim 1, 2 or 3, wherein a hinge pin (15) between the first (13) and the second part (14) of the tightening arm (2) is displacable in the length direction of the tightening arm (2) in at least one slit (18) provided in one of the parts (13, 14) of the tightening arm (2).

## Patentansprüche

1. Klemmsystem zum Festklemmen eines Lastbehälters (4), beispielsweise eines Dachkastens, an einer Lasteinhängevorrichtung (3), mit mindestens einem Paar Befestigungshaken (1) zum Befestigen an der Lasteinhängevorrichtung (3) und mindestens einem Festhaltearm (2) zum Festklemmen des Lastbehälters (4) an der Lasteinhängevorrichtung (3), wobei die Befestigungshaken (1) in den Lastbehälter (4) einsetzbar sind und der Festhaltearm (2) zwischen dem Paar Befestigungshaken (1) auf der Innenseite des Lastbehälters (4) vorgesehen ist,
**dadurch gekennzeichnet, dass**
die entgegengesetzten Enden (12) des Festhaltearms (2) in denjenigen Teil der Befestigungshaken einsetzbar sind, die in den Lastbehälter (4) vorstehen, der Festhaltearm (2) einen ersten Teil (13) und einen zweiten Teil (14) aufweist, die gelenkig miteinander verbunden sind, und dass der Festhaltearm (2), wenn er derart gegen den oder in Nachbarschaft des Innenbodens (11) des Lastbehälters (4) gedrückt ist, dass der Lastbehälter (4) an der Lasteinhängevorrichtung (3) festgeklemmt ist, in dieser Position verriegelbar ist.

2. Klemmsystem nach Anspruch 1, bei dem ein Stift (19) in einer verriegelten Position mit mindestens einer ersten Ausnehmung (20) in dem zweiten Teil (14) des Festhaltearms (2) und mit mindestens einer Ausnehmung (21) in dem ersten Teil (13) des Festhaltearms (2) zusammenwirkt, wenn der Lastbehälter (4) an der Lasteinhängevorrichtung (3) festgeklemmt ist.

3. Klemmsystem nach Anspruch 1 oder 2, bei dem der Festhaltearm (2) den Lastbehälter (4) mittels einer Hebelkraft direkt oder indirekt an der Lasteinhängevorrichtung (3) festklemmt.

4. Klemmsystem nach Anspruch 1, 2 oder 3, bei dem ein Gelenkstift (15) zwischen dem ersten (13) und dem zweiten Teil (14) des Festhaltearms (2) in mindestens einem in einem der Teile (13,14) des Festhaltearms (2) ausgebildeten Schlitz (18) in Längsrichtung des Festhaltearms (2) verschiebbar ist.

## Revendications

1. Système de serrage destiné à fixer un réceptacle (4) d'une charge, par exemple un coffre de toit, à un dispositif (3) de suspension de charge, comprenant au moins une paire de crochets (1) de fixation destinés à fixer au dispositif (3) de suspension de charge et au moins un bras de tension (2) destiné à fixer le réceptacle (4) de charge au dispositif (3) de suspension de charge, de sorte que les crochets (1) de fixation peuvent être insérés dans le réceptacle (4) de charge et le bras (2) de tension est disposé entre la paire de crochets (1) de fixation vers l'intérieur du réceptacle de charge (4), **caractérisé en ce que** les extrémités opposées (12) du bras (2) de tension sont destinées à être insérées dans la partie des crochets de fixation qui dépasse dans le réceptacle (4) de charge, **en ce que** le bras (2) de tension comporte une première partie (13) et une seconde partie (14) qui sont raccordées l'une à l'autre de manière articulée, et **en ce que** le bras (2) de tension, lorsqu'il est poussé vers le bas contre le fond interne (11) du réceptacle (4) de charge ou en position adjacente à ce fond, de sorte que le réceptacle (4) de charge est fixé sur le dispositif (3) de suspension de charge, est destiné à être bloqué dans cette position.

2. Système de serrage selon la revendication 1, dans lequel une broche (19) coopère avec au moins une première cavité (20) formée dans la seconde partie (14) du bras (2) de tension et au moins une cavité (21) formée dans la première partie (13) du bras (2) de tension en position bloquée lorsque le réceptacle (4) de charge est serré sur le dispositif (3) de suspension de charge.

3. Système de serrage selon la revendication 1 ou 2, dans lequel le bras (2) de tension, par une force de levier, fixe le réceptacle (4) de charge directement ou indirectement contre le dispositif (3) de suspension de charge.

4. Système de serrage selon la revendication 1, 2 ou 3, dans lequel une broche (15) d'articulation disposée entre les première (13) et seconde (14) parties du bras (2) de tension est destinée à être déplacée dans la direction de la longueur du bras (2) de tension dans au moins une fente (18) disposée dans l'une des parties (13, 14) du bras (2) de tension.
